(19) **Europäisches Patentamt / European Patent Office / Office européen des brevets**

(11) **EP 1 643 242 B1**

(12) **EUROPÄISCHE PATENTSCHRIFT**

(45) Veröffentlichungstag und Bekanntmachung des Hinweises auf die Patenterteilung:
**23.05.2007   Patentblatt 2007/21**

(51) Int Cl.:
***G01N 27/403*** *(2006.01)*

(21) Anmeldenummer: **04104850.5**

(22) Anmeldetag: **04.10.2004**

(54) **Bezugselektrode für potentiometrische Messungen und Verfahren zu deren Überwachung**

Reference electrode for potentiometric measurements and method of monitoring them

Electrode de référence pour des mesures potentiométriques et méthode de surveillance de ces mesures

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**05.04.2006   Patentblatt 2006/14**

(73) Patentinhaber: **Mettler-Toledo AG**
**8606 Greifensee (CH)**

(72) Erfinder: **Ehrismann, Philippe**
**8610, Uster (CH)**

(56) Entgegenhaltungen:
**DE-A1- 3 702 501          DE-A1- 19 639 372**
**DE-C1- 3 513 751          US-A- 4 360 415**
**US-A1- 2003 132 755**

## Beschreibung

### Technisches Gebiet

Die Erfindung betrifft eine Bezugselektrode für potentiometrische Messungen gemäss dem Oberbegriff des Anspruches 1 sowie ein Verfahren zu deren Überwachung.

### Stand der Technik

Es sind zahlreiche elektrochemische Sensoren bekannt, die zur einwandfreien Funktion eine potentialstabile Bezugselektrode benötigen. Eine weit verbreitete Art von Bezugselektroden ist mit einem Diaphragma aus einem porösen Material ausgestattet, über das ein in der Bezugselektrode enthaltener, in flüssiger Form vorliegender Bezugselektrolyt mit einem Messmedium in Kontakt bringbar ist. Eine gattungsgemässe Bezugselektrode ist in der DE 100 53 979 A1 als Teil einer elektrochemischen Messkette beschrieben.

Insbesondere beim Einsatz von Bezugselektroden im Rahmen einer Prozessüberwachung und/oder Prozesssteuerung bei chemischen oder mikrobiologischen Verfahren kann das Messmedium das Diaphragma verschmutzen oder in den Bezugselektrolyten eindringen und ihn verdünnen oder verunreinigen. In beiden Fällen kann es zu einer unkontrollierbaren Veränderung des von der Bezugselektrode gelieferten Potentials und damit zu einer Verfälschung der Messwerte kommen. Zur Vermeidung solch unerwünschter Effekte ist es bekannt, den Bezugselektrolyten mit einem gegenüber dem Messmedium erhöhten Druck zu beaufschlagen, wodurch der Bezugselektrolyt langsam aber stetig durch das Diaphragma hindurch in das Messmedium gedrängt wird. Damit wird ein Eindringen von Messmedium in die Bezugselektrode verhindert und zudem das Diaphragma ständig freigespült, wodurch der Ablagerung von Verschmutzungen aus dem Messmedium entgegengewirkt wird. Es ist jedoch erforderlich, den ausgeflossenen Bezugselektrolyten kontinuierlich oder in zeitlichen Abständen zu ersetzen.

Ein Nachteil der bekannten Bezugselektroden besteht darin, dass die Überwachung des Füllstandes des Bezugselektrolyten umständlich oder bisweilen sogar unmöglich ist. So ist es zwar möglich, bei Bezugselektroden mit Glasgehäuse den besagten Füllstand visuell festzustellen, wobei dies jedoch namentlich bei ständig betriebenen Anlagen und/oder bei Anlagen mit mehreren Bezugselektroden mit erheblichem Aufwand verbunden sein kann. Zudem ist in manchen Fällen das Innere der Bezugselektrode nicht ohne weiteres einsehbar, weil diese beispielsweise in eine Armatur eingebaut ist oder in ein trübes Messmedium ei n-taucht.

### Darstellung der Erfindung

Aufgabe der Erfindung ist es, eine verbesserte Bezugselektrode sowie ein Verfahren zu deren Überwachung anzugeben, um insbesondere die obigen Nachteile zu vermeiden.

Gelöst werden diese Aufgaben durch die im Anspruch 1 definierte Bezugselektrode sowie das im Anspruch 8 definierte Verfahren.

Die erfindungsgemässe Bezugselektrode umfasst ein Gehäuse aus elektrisch isolierendem Material, wobei das Gehäuse mindestens einen Hohlraum aufweist, welcher einen flüssigen Bezugselektrolyten sowie ein in diesen getauchtes Ableitelement enthält. Das Gehäuse weist zudem mindestens ein für den Bezugselektrolyten durchlässiges Diaphragma auf, durch das der Bezugselektrolyt mit einem ausserhalb des Gehäuses befindlichen Messmedium in Kontakt bringbar ist, wobei Mittel vorhanden sind, um einen Ausstrom des Bezugselektrolyten durch das Diaphragma hindurch zu bewirken. Im Hohlraum ist ein erstes elektrisches Kontaktelement derart angeordnet, dass es in den Bezugselektrolyten eingetaucht ist, sofern dessen Füllstand einen Schwellenwert nicht unterschreitet, und dass es nicht in den Bezugselektrolyten eingetaucht ist, sofern dessen Füllstand den Schwellenwert unterschreitet. Da der Bezugselektrolyt zwangsläufig eine gute elektrische Leitfähigkeit besitzt, wird zwischen dem ersten Kontaktelement und dem Ableitelement ein niedriger elektrischer Widerstand vorliegen, sofern das Kontaktelement ebenso wie das Ableitelement in den Bezugselektrolyten getaucht ist. Diese Situation liegt vor, wenn der Füllstand des Bezugselektrolyten genügend hoch ist. Andernfalls, d.h. bei zu niedrigem Füllstand, bildet der Bezugselektrolyt keine elektrische Verbindung zwischen dem Kontaktelement und dem Ableitelement, so dass der dazwischen liegende elektrische Widerstand wesentlich höher als bei genügendem Füllstand ist.

Demnach wird beim erfindungsgemässen Überwachungsverfahren der zwischen dem ersten Kontaktelement und dem Ableitelement vorliegende elektrische Widerstand auf Überschreitung eines vordefinierten ersten Schwellenwiderstandes überwacht. Der erste Schwellenwiderstand ist dabei so zu wählen, dass er zwischen den bei gefüllter Bezugselektrode und bei ungenügend gefüllter Bezugselektrode gemessenen Widerstandswerten liegt. Da diese Widerstandswerte in der Regel ganz erheblich differieren, ist die Wahl eines geeigneten Schwellenwiderstandes ohne Schwierigkeiten möglich.

Vorteilhafte Ausgestaltungen der Erfindung sind in den abhängigen Ansprüchen definiert.

Der für die Reinhaltung des Diaphragmas und zur Vermeidung einer Kontamination des Bezugselektrolyten durch Messmedium erforderliche Ausstrom des Bezugselektrolyten durch das Diaphragma kann auf verschiedene Arten bewirkt werden. Namentlich kann hierfür die Wirkung der Schwerkraft genutzt werden, wenn der Flüssigkeitsspiegel des Bezugselektrolyten höher liegt als jener des Messmediums. Bei der bevorzugten Ausgestaltung nach Anspruch 2 ist der Bezugselektrolyt mit einem gegenüber der Messlösung erhöhten Druck, beispielsweise mit einem Überdruck von 0,2 bis 0,5 bar, beaufschlagt.

Für manche Anwendungen ist es zweckmässig und ausreichend, als erstes Kontaktelement einen Drahtabschnitt oder einen Metallstreifen vorzusehen, der vom oberen Teil der Bezugselektrode her bis in einen mittleren Bereich des darin befindlichen Hohlraumes ragt. Bei der im Anspruch 3 definierten Ausgestaltung ist das erste Kontaktelement hingegen ringförmig um eine Längsachse des Gehäuses ausgebildet. Besonders vorteilhaft ist dies bei schräger Einbaulage der Bezugselektrode, wie dies oftmals beim Einbau in Reaktoren der Fall ist. Durch die ringförmige Ausgestaltung des ersten Kontaktelementes kann die Bezugselektrode in beliebiger Drehlage bezüglich der Längsachse angeordnet werden, ohne dadurch den Abstand zwischen dem unteren Ende des ersten Kontaktelementes und dem Füllstand des Bezugselektrolyten zu beeinflussen. Zweckmässigerweise ist das erste Kontaktelement gemäss Anspruch 4 an der Innenseite einer den Hohlraum begrenzenden Gehäusewand, beispielsweise an der Innenseite einer zylindrischen Gehäusewand, welche den Bezugselektrolyten enthält, angeordnet. Vorteilhafterweise ist gemäss Anspruch 5 das erste Kontaktelement durch eine elektrisch leitende Beschichtung gebildet, was eine sehr kompakte Bauweise der Bezugselektrode erlaubt.

Grundsätzlich kann die Bezugselektrode als einzelnes Bauteil mit eigenem Gehäuse ausgestaltet sein. Eine kompakte und bedienerfreundliche Ausgestaltung ist im Anspruch 6 definiert, wonach die Bezugselektrode in einer Einstabmesskette, vorzugsweise konzentrisch um eine Messelektrode, angeordnet ist.

Bei der im Anspruch 7 definierten Ausgestaltung ist im Hohlraum der Bezugselektrode ein zweites elektrisches Kontaktelement derart angeordnet, dass es nicht in den Bezugselektrolyten eingetaucht ist, sofern dessen Füllstand einen Maximalwert nicht überschreitet, und dass es in den Bezugselektrolyten eingetaucht ist, sofern dessen Füllstand den Maximalwert überschreitet. Insbesondere ermöglicht dies die im Anspruch 9 definierte Ausführungsform des Überwachungsverfahrens, wobei ein zwischen dem zweiten Kontaktelement und dem Ableitelement vorliegender elektrischer Widerstand auf Unterschreitung eines zweiten Schwellenwiderstandes überwacht wird.

Bei der im Anspruch 10 definierten Ausführungsform des Verfahrens werden bei Überschreitung des ersten Schwellenwiderstandes und gegebenenfalls bei Unterschreitung des zweiten Schwellenwiderstandes zugeordnete Warnsignale und/oder Steuerungssignale erzeugt. Mit den Warnsignalen kann der Benutzer darauf hingewiesen werden, dass Bezugselektrolyt nachzufüllen oder gegebenenfalls die Bezugselektrode zu ersetzen ist, beziehungsweise dass der maximale Füllstand erreicht ist und somit der Nachfüllvorgang abgeschlossen ist. Es ist aber auch möglich, im Rahmen eines automatisierten Betriebs mit den Steuerungssignal einen Nachfüllvorgang auszulösen, bei dem Bezugselektrolyt in die Bezugselektrode zugeführt wird und diesen bei Erreichen des maximalen Füllstandes zu beenden.

## Kurze Beschreibung der Zeichnungen

Ausführungsbeispiele der Erfindung werden nachfolgend anhand der Zeichnungen näher beschrieben, dabei zeigen:

Fig. 1  eine Bezugselektrode in gefülltem Zustand, in zentralem Längsschnitt;

Fig. 2  die Bezugselektrode der Fig. 1, mit unterhalb des Schwellenwertes liegendem Füllstand des Bezugselektrolyten, in zentralem Längsschnitt;

Fig. 3  eine grafische Darstellung des zeitlichen Verlaufs des elektrischen Widerstandes zwischen dem ersten elektrischen Kontaktelement und dem Ableitelement der Bezugselektrode der Fig. 1 und 2;

Fig. 4  eine Einstabmesskette in gefülltem Zustand, in zentralem Längsschnitt;

Fig. 5  eine weitere Bezugselektrode, in schräger Einbaulage, in zentralem Längsschnitt;

Fig. 6  die Bezugselektrode der Fig. 5, in einer um 90° verdrehten Drehlage, in zentralem Längsschnitt;

Fig. 7  eine weitere Bezugselektrode in annähernd maximal gefülltem Zustand, in zentralem Längsschnitt.

## Wege zur Ausführung der Erfindung

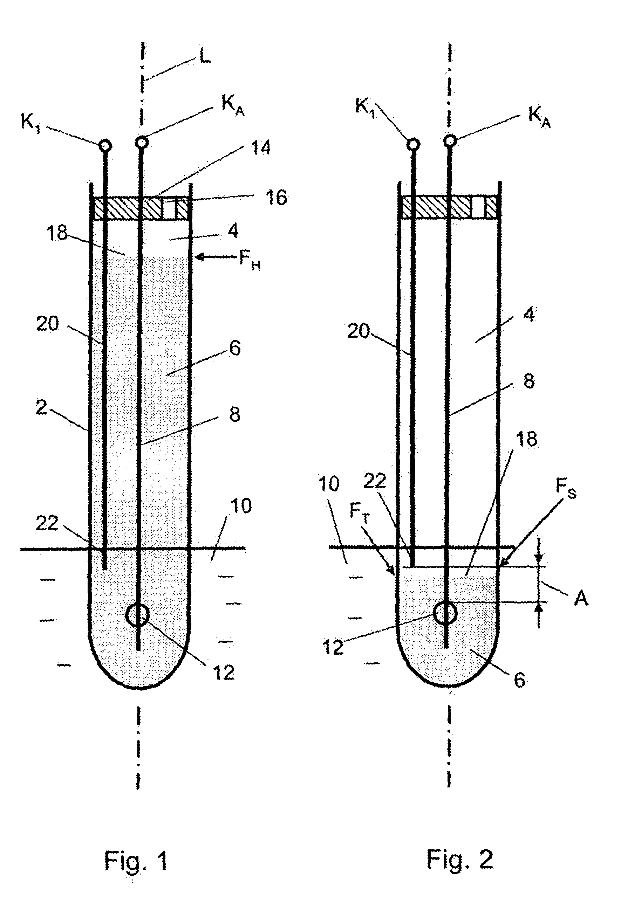

Die in den Fig. 1 und 2 dargestellte Bezugselektrode weist ein Glasgehäuse 2 mit einem inneren Hohlraum 4 auf, der einen flüssigen Bezugselektrolyten 6 sowie ein in diesen getauchtes Ableitelement 8 enthält. Die Bezugselektrode ist bei der gezeigten Betriebsstellung mit ihrer Längsachse L im Wesentlichen vertikal ausgerichtet und mit ihrem unteren Teil in ein Messmedium 10 eingetaucht. Das Gehäuse 2 weist zudem ein im unteren Teil der Bezugselektrode angeordnetes, für den Bezugselektrolyten durchlässiges Diaphragma 12 auf, durch welches der Bezugselektrolyt 6 mit dem ausserhalb des Gehäuses befindlichen Messmedium 10 in Kontakt steht. Beispielsweise handelt es sich bei der Bezugselektrode um eine an sich bekannte Ag/AgCl-Elektrode, bei der das Ableitelement 8 ein mit Silberchlorid beschichteter Silberdraht und der Bezugselektrolyt 6 eine beispielsweise 3-molare wässrige Kaliumchloridlösung ist. Das Diaphragma 12 ist beispielsweise aus einem Stift aus poröser Keramik gebildet.

Weiter umfasst die Bezugselektrode einen oberen Abschluss 14, der mit einer dichtenden Durchführung für das Ableitelement 8 versehen ist. Der obere Abschluss 14 ist zudem mit einer Öffnung 16 versehen, die einerseits zum Nachfüllen von Bezugselektrolyten vorgesehen ist, andererseits aber auch eine Druckbeaufschlagung des Hohlraums 4 erlaubt. Beispielsweise kann der Hohlraum 4 und der darin befindliche Bezugselektrolyt 6 mit einem Überdruck von 0.2 bis 0.5 bar beaufschlagt werden, womit der Bezugselektrolyt 6 langsam aber stetig durch das Diaphragma 12 hindurch in das Messmedium 10 gedrängt wird. Damit wird eine Verschmutzung des Diaphragmas 12 und ein unerwünschtes Eindringen von Messmedium 10 in den Bezugselektrolyten 6 vermieden.

Der kontinuierliche Austritt des Bezugselektrolyten 6 hat jedoch zur Folge, dass dessen Flüssigkeitsspiegel 18 allmählich absinkt und beispielsweise von einem anfänglich hohen Füllstand $F_H$ gemäss der Fig. 1 auf einen tiefen Füllstand $F_T$ gemäss der Fig. 2 abfällt. Es ist ohne weiteres nachvollziehbar, dass ein weiteres Absinken des Elektrolytspiegels 18 bis hin zum Diaphragma 12 unerwünscht ist, da ansonsten der gewollte Ausstrom des Bezugselektrolyten 6 abnimmt und schliesslich ganz ausbleibt. Um dies zu vermeiden, ist im Hohlraum 4 ein erstes elektrisches Kontaktelement 20 angeordnet, welches eine Überwachung des Füllstandes ermöglicht.

Das erste Kontaktelement 20 ist wie das Ableitelement 8 dichtend durch den oberen Abschluss 14 geführt und ragt in den Hohlraum 4 hinein. Das erste Kontaktelement 20 ist derart bemessen und angeordnet, dass sein unteres Ende 22 um einen Abstand A höher liegt als die Oberkante des Diaphragmas 12. Wie aus der Fig. 1 hervorgeht, ist bei ausreichend befüllter Bezugselektrode das erste Kontaktelement 20 in den Bezugselektrolyten 6 eingetaucht. Demgegenüber ist bei der in Fig. 2 dargestellten Situation der Elektrolytspiegel 18 auf einen Füllstand $F_T$ gesunken, der unterhalb des unteren Endes 22 des ersten Kontaktelementes 20 liegt, so dass letzteres nicht in den Bezugselektrolyten 6 eingetaucht ist. Demnach definiert die auf das Elektrodengehäuse bezogene Höhenlage des unteren Endes 22 einen Schwellenwert $F_S$ für den Füllstand des Bezugselektrolyten 6. Sofern der Füllstand den Schwellenwert $F_S$ nicht unterschreitet, ist das erste Kontaktelement 20 in den Bezugselektrolyten 6 eingetaucht; unterschreitet hingegen der Füllstand den Schwellenwert $F_S$ so ist das erste Kontaktelement 20 nicht in den Bezugselektrolyten 6 eingetaucht.

Durch Messung des elektrischen Widerstandes zwischen dem Ableitelement 8 und dem ersten Kontaktelement 20 lässt sich ohne weiteres feststellen, ob das erste Kontaktelement 20 in den Bezugselektrolyten 6 eingetaucht ist oder nicht. Zweckmässigerweise wird hierfür der Widerstand $R_1$ zwischen einer äusseren Kontaktstelle $K_A$ des Ableitelementes 8 und einer äusseren Kontaktstelle $K_1$ des ersten Kontaktelementes 20 gemessen.

Dieser Widerstand ist bei eingetauchtem erstem Kontaktelement 20 aufgrund der guten elektrischen Leitfähigkeit des Bezugselektrolyten 6 vergleichsweise klein und beträgt typischerweise weniger als 100 kΩ. Demgegenüber ist der besagte Widerstand $R_1$ bei nicht eingetauchtem erstem Kontaktelement 20 wesentlich höher und beträgt typischerweise mehr als 1000 kΩ oder mehr. Demnach macht sich das Abfallen des Füllstandes unter den Schwellenwert $F_S$ durch einen Anstieg des Widerstandes $R_1$ um eine Zehnerpotenz oder mehr bemerkbar.

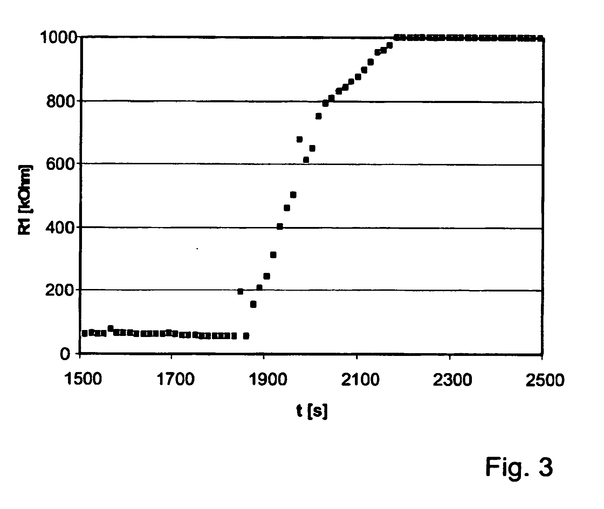

Ein beispielhafter Verlauf des besagten elektrischen Widerstandes $R_1$ als Funktion der Zeit t ist in der Fig. 3 dargestellt. Anfänglich, d.h. bis zu einer Zeit von ungefähr 1800 s ist $R_1$ im Wesentlichen konstant und weist einen Wert von rund 60 kΩ auf. Zu einer Zeit um 1900 s steigt $R_1$ sprungartig, d.h. innerhalb von ungefähr 100 s, auf Werte über 1000 kΩ an. Das verwendete Messgerät hatte eine obere Messgrenze von 1000 kΩ, die bei einer Zeit um 2100 s nachhaltig überschritten wurde. In der praktischen Anwendung wird der Widerstand $R_1$ mittels einer entsprechenden Überwachungsvorrichtung auf Überschreitung eines vordefinierten, vorzugsweise einstellbaren ersten Schwellenwiderstandes $R_{1S}$ überwacht, welcher so zu wählen ist, dass er zwischen den bei gefüllter Bezugselektrode und bei ungenügend gefüllter Bezugselektrode gemessenen Widerstandswerten liegt. Beispielsweise wird der erste Schwellenwiderstand $R_{1S}$ auf einen Wert von 400 kΩ eingestellt.

Zweckmässigerweise wird bei Überschreitung des ersten Schwellenwiderstandes $R_{1S}$ ein Warnsignal ausgelöst, wofür beispielsweise ein optischer und/oder akustischer Signalgeber vorgesehen sein kann. Damit kann der Benutzer darauf hingewiesen werden, dass Bezugselektrolyt nachzufüllen ist oder gegebenenfalls die Bezugselektrode zu ersetzen ist. Es ist auch möglich, bei Überschreitung des Schwellenwiderstandes $R_{1S}$ ein Steuerungssignal zu erzeugen, das an eine Nachfüllvorrichtung geleitet wird und dort einen Nachfüllvorgang auslöst. Beispielsweise kann die Nachfüllvorrichtung derart programmiert sein, dass sie bei Empfang des Steuerungssignals eine vorgegebene Menge an Bezugselektrolyten in die Bezugselektrode einspeist.

Wie aus den Fig. 1 und 2 leicht erkennbar ist, stellt der Abstand A insofern eine Sicherheitsreserve dar, als beim Unterschreiten des Schwellenwertes $F_S$ der Elektrolytspiegel 18 zunächst noch oberhalb des Diaphragmas 12 liegt, so dass eine gewisse Restbetriebsdauer verbleibt, bevor eine Nachfüllung mit Bezugselektrolyten 6 zwingend erforderlich wird. Um eine genügende Vorwarnzeit zu haben, ist es zweckmässig, den Abstand A umso grösser zu wählen, je schneller die Ausflussrate des Bezugselektrolyten 6 ist.

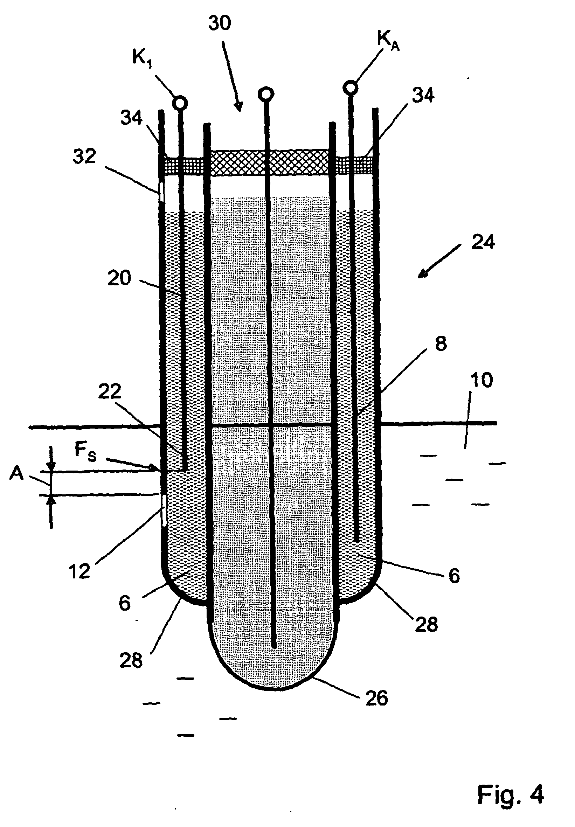

Die Fig. 4 zeigt eine weitere Bezugselektrode, die in eine als Einstabmesskette ausgestaltete Messsonde integriert ist. Die Messsonde weist ein aus Glas oder Kunststoff gefertigtes Sondengehäuse 24 auf, dessen unteres Ende in das Messmedium 10 eingetaucht ist. Dabei beherbergt das Sondengehäuse 24 eine Zentralkammer 26 sowie eine konzentrisch um diese angeordnete Ringkammer 28. Die Zentralkammer 26 enthält ein als pH-Elektrode ausgestaltetes erstes Halbzellenelement 30, während in der Ringkammer 28 ein als Bezugselektrode ausgestaltetes zweites Halbzellenelement untergebracht ist. Der grundsätzliche Aufbau der beiden Halbzellenelemente ist an sich bekannt und wird hier nicht näher erläutert. Statt einer pH-Elektrode kann die Messsonde ein anderes Halbzellenelement wie beispielsweise eine Redoxelektrode beherbergen.

Die Ringkammer 28 weist im Eintauchbereich ein Diaphragma 12 auf und ist zudem im obersten Teil mit einer seitlichen Nachfüllöffnung 32 versehen. Weiterhin enthält die Ringkammer 28 eine Referenzelektrolytlösung 6, beispielsweise eine gesättigte Kaliumchloridlösung, in welche ein als Ableitelement 8 wirkender, mit einer Silberchloridschicht bedeckter Silberdraht getaucht ist. Letzterer ist über ein oberes Abschlussteil 34 der Ringkammer 28 dichtend zu einer äusseren Kontaktstelle $K_A$ geführt.

Die Bezugselektrode der Fig. 4 enthält zudem ein erstes elektrisches Kontaktelement 20, das ebenfalls durch das obere Abschlussteil 34 dichtend geführt ist und in die Ringkammer 28 ragt. Das erste Kontaktelement 20 ist derart bemessen und angeordnet, dass sein unteres Ende 22 um einen Abstand A höher liegt als die Oberkante des Diaphragmas 12. Ausserdem ist das erste Kontaktelement 20 mit einer äusseren Kontaktstelle $K_1$ versehen. Wie bei der zuvor erläuterten Ausgestaltung der Fig. 1 und 2 erlaubt die Anordnung des ersten Kontaktelementes 20 die Überwachung des Füllstandes des Bezugselektrolyten 6, wobei diesbezüglich der Innenraum der Ringkammer 28 funktionell äquivalent zum Innenraum 4 der Bezugselektrode der Fig. 1 und 2 ist.

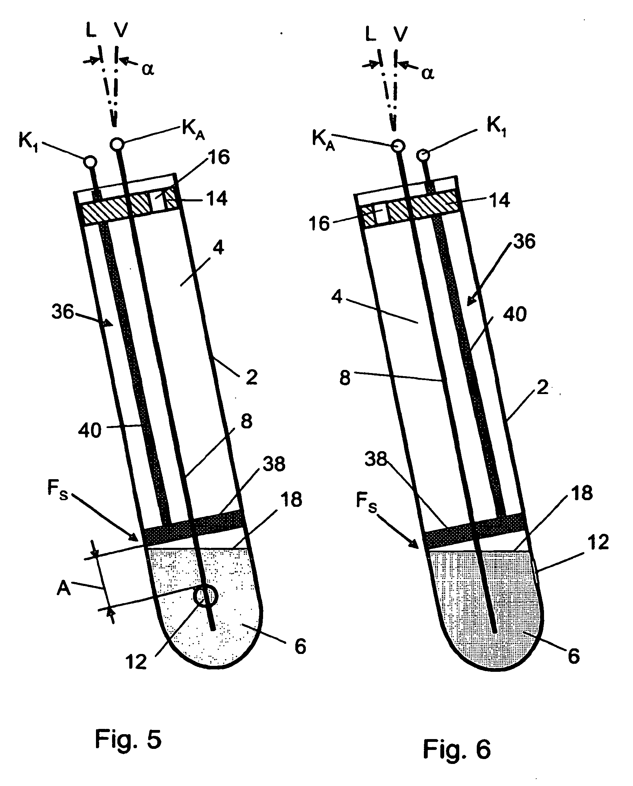

Die Fig. 5 und 6 zeigen eine weitere Bezugselektrode, die sich von derjenigen der Fig. 1 und 2 lediglich durch die Ausgestaltung des ersten elektrischen Kontaktelementes unterscheidet. Demnach sind identische Bestandteile in den Fig. 1 und 2 sowie 5 und 6 mit denselben Bezugszeichen gekennzeichnet und hier nicht im Einzelnen beschrieben. Das erste Kontaktelement 36 weist einen an der Innenseite des Gehäuses 2 angeordneten elektrisch leitenden, umlaufenden Ringstreifen 38 auf, dessen Ringebene im Wesentlichen senkrecht zur Längsachse L des Gehäuses 2 liegt. Zwischen der Unterkante des ersten Kontaktelementes 36 und der Oberkante des Diaphragmas 12 ist ein Abstand A vorgesehen. Ein elektrisch leitender Längsstreifen 40 verläuft an der Innenseite des Gehäuses 2 vom Ringstreifen 38 bis zum oberen Ende des Gehäuses 2 und ist dort mit einer äusseren Kontaktstelle $K_1$ ausgestattet. Vorteilhafterweise sind Ringstreifen 38 und Längsstreifen 40 durch Leiterbahnen gebildet, die auf die Gehäuseinnenwand geschichtet sind. Im gezeigten Beispiel verläuft der Längsstreifen 40 zwischen der Gehäuseinnenwand und dem Aussenrand des oberen Abschlusses 14 hindurch, wobei eine mediumdichte Durchführung gebildet wird.

Wie aus der Zusammenschau der Fig. 5 und 6 hervorgeht, ist die ringförmige Ausgestaltung des ersten Kontaktelementes 36 bei einer schrägen, d.h. nichtvertikalen Einbaulage der Bezugselektrode besonders vorteilhaft. Schräge Einbaulagen werden in der Praxis vielfach angewendet und sind beispielsweise bei manchen Reaktionsgefässen vorgegeben. Anders als bei einem als Längsdraht oder Längsstreifen ausgebildeten ersten Kontaktelement ist beim Ringstreifen 38 der minimale Abstand zum Flüssigkeitsspiegel 18 des Bezugselektrolyten 6 unabhängig von der Drehlage des Gehäuses 2 um die Längsachse L. Dementsprechend wird bei ausfliessendem Bezugselektrolyten während des Betriebs der Bezugselektrode der Kontakt zwischen dem ersten Kontaktelement 36 und dem Bezugselektrolyten 6 unabhängig von der Drehlage stets bei demselben Schwellenwert $F_S$ des Füllstandes unterbrochen. Somit muss bei der Anbringung des ersten Kontaktelementes 36 nicht auf die vorgesehene Drehlage der Bezugselektrode geachtet werden, die somit auch nachträglich ohne Beeinträchtigung der Füllstandüberwachung geändert werden kann.

Wie ebenfalls aus den Fig. 5 und 6 hervorgeht, befindet sich jedoch das Diaphragma 12 je nach Drehlage in unterschiedlichen Höhenlagen gegenüber dem Flüssigkeitsspiegel 18. Beispielsweise befindet sich das Diaphragma 12 bei der ersten Drehlage gemäss der Fig. 5 noch deutlich unterhalb des Flüssigkeitsspiegels 18, wogegen bei der um 90° versetzten Drehlage gemäss der Fig. 6 der Flüssigkeitsspiegel 18 nur noch wenig oberhalb des Diaphragmas 12 liegt. Dieser Effekt muss bei der anfänglichen Festlegung des Abstandes A zwischen der Unterkante des Ringstreifens 38 und der Oberkante des Diaphragmas 12 berücksichtigt werden.

Betrachtet man zunächst den Grenzfall, bei dem der elektrische Kontakt zwischen dem ersten Kontaktelement 36 und dem Bezugselektrolyten 6 genau dann unterbrochen werden soll, wenn der Flüssigkeitsspiegel 18 bis zur Oberkante des Diaphragmas 12 abgesunken ist, so ist der Abstand A im Falle eines kreiszylinderförmigen Gehäuses 2 wie folgt zu wählen:

$$A = D \tan \alpha$$

wobei D der Innendurchmesser des Gehäuses 2 und a der Neigungswinkel der Längsachse L gegenüber der Vertikalen V ist. Bei vertikaler Einbaulage ist der erforderliche Abstand A gleich Null, was dem hier betrachteten Grenzfall entspricht. Mit zunehmendem Neigungswinkel $\alpha$ (in Anbetracht der Funktionsweise der Bezugselektrode muss der Winkel $\alpha$ weniger als 90° betragen) nimmt der erforderliche Abstand A zu.

In der Regel wird man jedoch zwecks angemessener Vorwarnzeit einen grösseren Abstand A' wählen, der dann sinnvollerweise wie folgt gewählt wird:

$$A' = A_0 + D \tan \alpha$$

wobei $A_0$ eine Konstante ist. Bei nicht kreiszylinderförmigen Gehäusen sind entsprechend komplexere, jedoch analoge geometrische Überlegungen zu machen.

Das hier anhand einer einzelnen Bezugselektrode erläuterte ringförmige erste Kontaktelement 36 lässt sich sinngemäss auch bei Einstabmessketten anwenden, namentlich wenn diese für eine schräge Einbaulage vorgesehen sind.

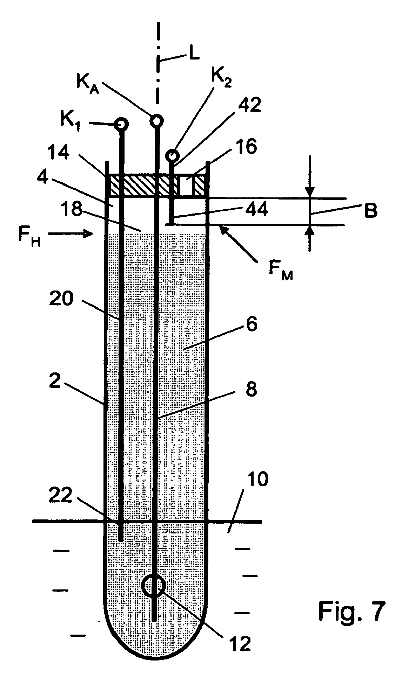

Die in der Fig. 7 dargestellte Bezugselektrode ist wie diejenige der Fig. 1 und 2 ausgebildet, enthält jedoch zusätzlich ein zweites elektrisches Kontaktelement 42, das ebenfalls dichtend durch den oberen Abschluss 14 geführt ist und in den Hohlraum 4 hineinragt. Das zweite Kontaktelement 42 ist derart bemessen und angeordnet, dass sich sein unteres Ende 44 um einen Abstand B unterhalb der Unterseite des oberen Abschlusses 14 befindet. Bei dem in der Fig. 7 gezeigten Füllstand ist das zweite Kontaktelement 42 nicht in den Bezugselektrolyten 6 eingetaucht. Die auf das Elektrodengehäuse bezogene Höhenlage des unteren Endes 44 des zweiten Kontaktelementes 42 definiert einen Schwellenwert $F_M$ für den Füllstand des Bezugselektrolyten 6. Sofern der Füllstand den Schwellenwert $F_M$ nicht überschreitet, ist das zweite Kontaktelement 42 nicht in den Bezugselektrolyten 6 eingetaucht; überschreitet hingegen der Füllstand den Maximalwert $F_M$ so ist das zweite Kontaktelement 42 in den Bezugselektrolyten 6 eingetaucht.

Durch Messung des elektrischen Widerstandes zwischen dem Ableitelement 8 und dem zweiten Kontaktelement 42 lässt sich ohne weiteres feststellen, ob das zweite Kontaktelement 42 in den Bezugselektrolyten eingetaucht ist oder nicht. Zweckmässigerweise wird hierfür der Widerstand $R_2$ zwischen einer äusseren Kontaktstelle $K_A$ des Ableitelementes 8 und einer äusseren Kontaktstelle $K_2$ des zweiten Kontaktelementes 42 gemessen. Wie bereits im Zusammenhang mit dem ersten Kontaktelement 22 erläutert, hängt auch der Wert des elektrischen Widerstandes $R_2$ wesentlich davon ab, ob das zweite Kontaktelement 42 in den Bezugselektrolyten 6 eingetaucht ist oder nicht. Namentlich macht sich ein Ansteigen des Füllstandes über den Maximalwert $F_M$ durch einen erheblichen Abfall des Widerstandes $R_2$ beispielsweise von über 1000 k$\Omega$ auf weniger als 100 k$\Omega$ bemerkbar. Zweckmässigerweise wird bei Unterschreitung des zweiten Schwellenwiderstandes $R_{2S}$ ein Warnsignal ausgelöst, wofür beispielsweise ein optischer und/oder akustischer Signalgeber vorgesehen sein kann. Damit kann der Benutzer darauf hingewiesen werden, dass das Nachfüllen von Bezugselektrolyten abzubrechen ist. Es ist auch möglich, bei Unterschreitung des zweiten Schwellenwiderstandes $R_{2S}$ ein Steuerungssignal zu erzeugen, das an eine Nachfüllvorrichtung geleitet wird und dort einen laufenden Nachfüllvorgang anhält.

Das hier anhand der Fig. 7 erläuterte zweite Kontaktelement 42 lässt sich auf entsprechende Art und Weise auch bei den in den Fig. 1 und 2 bzw. Fig. 4 und 5 dargestellten Bezugselektroden einsetzen.

<u>Bezugszeichenliste</u>

| | |
|---|---|
| 2 | Gehäuse |
| 4 | Hohlraum |
| 6 | Bezugselektrolyt |
| 8 | Ableitelement |
| 10 | Messmedium |
| 12 | Diaphragma |
| 14 | oberer Abschluss von 4 |
| 16 | Durchgangsöffnung |
| 18 | Flüssigkeitsspiegel von 6 |
| 20 | erstes Kontaktelement |
| 22 | unteres Ende von 20 |
| 24 | Sondengehäuse |
| 26 | Zentralkammer |
| 28 | Ringkammer |
| 30 | erstes Halbzellenelement |
| 32 | Nachfüllöffnung |
| 34 | oberes Abschlussteil von 28 |
| 36 | erstes Kontaktelement |
| 38 | Ringstreifen |
| 40 | Längsstreifen |
| 42 | zweites Kontaktelement |
| 44 | unteres Ende von 42 |
| A | Abstand zwischen 22 und 12 |
| B | Abstand zwischen 44 und 34 |
| $F_H$ | hoher Füllstand von 6 |
| $F_T$ | tiefer Füllstand von 6 |
| $F_S$ | Schwellenwert des Füllstandes |
| $F_M$ | Maximalwert des Füllstandes |
| $K_A$ | äussere Kontaktstelle von 8 |
| $K_1$ | äussere Kontaktstelle von 20 bzw. 36 |
| $K_2$ | äussere Kontaktstelle von 42 |
| $R_1$ | elektrischer Widerstand zwischen $K_1$ und $K_A$ |
| $R_2$ | elektrischer Widerstand zwischen $K_2$ und $K_A$ |
| $R_{1S}$ | erster Schwellenwiderstand |
| $R_{2S}$ | zweiter Schwellenwiderstand |
| L | Längsachse von 2 |
| $\alpha$ | Neigungswinkel von L gegenüber der Vertikalen V |

**Patentansprüche**

**1.** Bezugselektrode für potentiometrische Messungen, mit einem Gehäuse (2, 24) aus elektrisch isolierendem Material, wobei das Gehäuse mindestens einen Hohlraum (4) aufweist, welcher einen flüssigen Bezugselektrolyten (6) sowie ein in diesen getauchtes Ableitelement (8) enthält, wobei das Gehäuse zudem mindestens ein für den Bezugselektrolyten (6) durchlässiges Diaphragma (12) aufweist, durch das der Bezugselektrolyt (6) mit einem ausserhalb des Gehäuses (2, 24) befindlichen Messmedium (10) in Kontakt bringbar ist, und wobei Mittel vorhanden sind, um einen Ausstrom des Bezugselektrolyten (6) durch das Diaphragma (12) hindurch zu bewirken, wobei im Hohlraum (4) ein erstes elektrisches Kontaktelement (20, 36) derart angeordnet ist, dass es in den Bezugselektrolyten (6) eingetaucht ist, sofern dessen Füllstand (18) einen Schwellenwert ($F_S$) nicht unterschreitet, und wobei es nicht in den Bezugselektrolyten (6) eingetaucht ist, sofern dessen Füllstand (18) den Schwellenwert ($F_S$) unterschreitet, **gekennzeichnet durch** eine Überwachungsvorrichtung zur Überwachung eines zwischen dem Ableitelement (8) und dem ersten elektrischen Kontaktelement (20,36) messbaren elektrischen Widerstands.

2. Bezugselektrode nach Anspruch 1, **dadurch gekennzeichnet, dass** der Bezugselektrolyt (6) mit einem gegenüber dem Messmedium (10) erhöhten Druck beaufschlagt ist.

3. Bezugselektrode nach Anspruch 1 oder 2, **dadurch gekennzeichnet, dass** das erste Kontaktelement (36) ringförmig um eine Längsachse (L) des Gehäuses (2) ausgebildet ist.

4. Bezugselektrode nach einem der Ansprüche 1 bis 3, **dadurch gekennzeichnet, dass** das erste Kontaktelement (36) an der Innenseite einer den Hohlraum begrenzenden Gehäusewand (2) angeordnet ist.

5. Bezugselektrode nach einem der Ansprüche 1 bis 4, **dadurch gekennzeichnet, dass** das erste Kontaktelement (36) durch eine elektrisch leitende Beschichtung gebildet ist.

6. Bezugselektrode nach einem der Ansprüche 1 bis 5, **dadurch gekennzeichnet, dass** diese in einer Einstabmesskette (24), vorzugsweise konzentrisch um eine Messelektrode (26, 30), angeordnet ist.

7. Bezugselektrode nach einem der Ansprüche 1 bis 6, **dadurch gekennzeichnet, dass** im Hohlraum (4) ein zweites elektrisches Kontaktelement (42) derart angeordnet ist, dass es nicht in den Bezugselektrolyten (6) eingetaucht ist, sofern dessen Füllstand (18) einen Maximalwert ($F_M$) nicht überschreitet, und dass es in den Bezugselektrolyten (6) eingetaucht ist, sofern dessen Füllstand (18) den Maximalwert ($F_M$) überschreitet.

8. Verfahren zur Überwachung einer Bezugselektrode nach einem der Ansprüche 1 bis 7, wobei ein zwischen dem ersten Kontaktelement (20, 36) und dem Ableitelement (8) vorliegender elektrischer Widerstand ($R_1$) auf Überschreitung eines ersten Schwellenwiderstandes ($R_{1S}$) überwacht wird.

9. Verfahren nach Anspruch 8 mit einer Bezugselektrode nach Anspruch 7, wobei ein zwischen dem zweiten Kontaktelement (42) und dem Ableitelement (8) vorliegender elektrischer Widerstand ($R_2$) auf Unterschreitung eines zweiten Schwellenwiderstandes ($R_{2S}$) überwacht wird.

10. Verfahren nach Anspruch 8 oder 9, **dadurch gekennzeichnet, dass** bei Überschreitung des ersten Schwellenwiderstandes ($R_{1S}$) und gegebenenfalls bei Unterschreitung des zweiten Schwellenwiderstandes ($R_{2S}$) zugeordnete Warnsignale und/oder Steuerungssignale erzeugt werden.

## Claims

1. Reference electrode for potentiometric measurements, with a housing (2, 24) of electrically insulating material, wherein the housing comprises at least one hollow space (4) containing a liquid reference electrolyte (6) as well as a conductor element (8) immersed in the reference electrolyte, wherein the housing in addition has at least one diaphragm (12) which is permeable for the reference electrolyte (6) and through which the reference electrolyte (6) can be brought into contact with a measuring medium (10) outside of the housing (2, 24), and wherein means are provided to effect an outflow of the reference electrolyte (6) through the diaphragm (12), wherein a first electrical contact element (20, 36) is arranged in the hollow space (4) in such a manner that the contact element is immersed in the reference electrolyte (6) as long as the fill level (18) of the reference electrolyte (6) does not fall below a threshold value ($F_S$), and wherein the contact element is not immersed in the reference electrolyte (6) if the fill level (18) falls below the threshold value ($F_S$), **characterized by** a monitoring device for monitoring an electrical resistance that can be measured between the conductor element (8) and the first electrical contact element (20, 36).

2. Reference electrode according to claim 1, **characterized in that** the reference electrolyte (6) is put under an elevated pressure relative to the measuring medium (10).

3. Reference electrode according to claim 1 or 2, **characterized in that** the first contact element (36) is configured in the shape of a ring around a longitudinal axis (L) of the housing (2).

**4.** Reference electrode according to one of the claims 1 to 3, **characterized in that** the first contact element (36) is arranged on the inside of a housing wall (2) which delimits the hollow space.

**5.** Reference electrode according to one of the claims 1 to 4, **characterized in that** the first contact element (36) is formed by an electrically conductive coating.

**6.** Reference electrode according to one of the claims 1 to 5, **characterized in that** the reference electrode is arranged in a single-rod measuring chain (24), preferably concentric around a measuring electrode (26, 30).

**7.** Reference electrode according to one of the claims 1 to 6, **characterized in that** a second electrical contact element (42) is arranged inside the hollow space (4) in such a way that the second electrical contact element (42) is not immersed in the reference electrolyte (6) as long as the latter has a fill level (18) not exceeding a maximum value ($F_M$), and that the second electrical contact element (42) is immersed in the reference electrolyte (6) when the fill level (18) of the reference electrolyte (6) exceeds the maximum value ($F_M$).

**8.** Method of monitoring a reference electrode according to one of the claims 1 to 7, wherein an electrical resistance ($R_1$) that exists between the first contact element (20, 36) and the conductor element (8) is monitored in regard to exceeding a first threshold resistance ($R_{1S}$).

**9.** Method according to claim 8 with a reference electrode according to claim 7, wherein an electrical resistance ($R_2$) that exists between the second contact element (42) and the conductor element (8) is monitored in regard to falling below a second threshold resistance ($R_{2S}$).

**10.** Method according to claim 8 or 9, **characterized in that** when the first threshold resistance ($R_{1S}$) is exceeded and, if applicable, when there is a shortfall below the second threshold resistance ($R_{2S}$), respectively correlated warning signals and/or command signals are generated.

**Revendications**

**1.** Electrode de référence pour des mesures potentiométriques, avec un boîtier (2, 24) à base de matériau électro-isolant, le boîtier présentant au moins une cavité (4) qui contient un électrolyte de référence (6) liquide et un élément conducteur (8) plongé dans cet électrolyte, le boîtier présentant de plus au moins un diaphragme (12) perméable pour l'électrolyte de référence (6), par lequel l'électrolyte de référence (6) peut être mis en contact avec un fluide de mesure (10) se trouvant à l'extérieur du boîtier (2, 24) et des moyens étant présents pour entraîner une évacuation de l'électrolyte de référence (6) à travers le diaphragme (12), un premier élément de contact (20, 36) électrique étant disposé dans la cavité (4) de telle sorte qu'il est immergé dans l'électrolyte de référence (6) dans la mesure où son niveau de remplissage (18) ne passe pas au-dessous d'une valeur seuil ($F_S$) et sachant qu'il n'est pas plongé dans l'électrolyte de référence (6) dans la mesure où son niveau de remplissage (18) n'est pas inférieur à la valeur ($F_S$), **caractérisée par** un dispositif de contrôle pour le contrôle d'une résistance électrique mesurable entre l'élément conducteur (8) et le premier élément de contact électrique (20, 36).

**2.** Electrode de référence selon la revendication 1, **caractérisée en ce que** l'électrolyte de référence (6) est alimenté avec une pression élevée par rapport au fluide de mesure (10).

**3.** Electrode de référence selon la revendication 1 ou 2, **caractérisée en ce que** le premier élément de contact (36) est conçu avec une forme annulaire autour d'un axe longitudinal (L) du boîtier (2).

**4.** Electrode de référence selon l'une quelconque des revendications 1 à 3, **caractérisée en ce que** le premier élément de contact (36) est disposé sur le côté intérieur d'une paroi de boîtier (2) délimitant la cavité.

**5.** Electrode de référence selon l'une quelconque des revendications 1 à 4, **caractérisée en ce que** le premier élément de contact (36) est formé par un revêtement électroconducteur.

**6.** Electrode de référence selon l'une quelconque des revendications 1 à 5, **caractérisée en ce que** cette électrode est disposée dans une électrode combinée (24), de préférence concentrique autour d'une électrode de mesure (26, 30).

**7.** Electrode de référence selon l'une quelconque des revendications 1 à 6, **caractérisée en ce qu'**un second élément de contact (42) électrique est disposé dans la cavité (4) de telle sorte qu'il n'est pas immergé dans l'électrolyte de référence (6) dans la mesure où son niveau de remplissage (18) ne dépasse pas une valeur maximale ($F_M$) et **en ce qu'**il est immergé dans l'électrolyte de référence (6) lorsque son niveau de remplissage (18) dépasse la valeur maximale ($F_M$).

**8.** Procédé pour le contrôle d'une électrode de référence selon l'une quelconque des revendications 1 à 7, une résistance ($R_1$) électrique présente entre le premier élément de contact (20, 36) et l'élément conducteur (8) étant contrôlée au niveau du dépassement d'une première résistance seuil ($R_{1S}$).

9. Procédé selon la revendication 8 avec une électrode de référence selon la revendication 7, une résistance ($R_2$) électrique présente entre le second élément de contact (42) et l'élément conducteur (8) étant contrôlée au niveau du sous-dépassement d'une seconde résistance seuil ($R_{2S}$).

10. Procédé selon la revendication 8 ou 9, **caractérisé en ce que**, en cas de dépassement de la première résistance seuil ($R_{1S}$) et éventuellement en cas de sous-dépassement de la seconde résistance seuil ($R_{2S}$), des signaux d'avertissement et/ou des signaux de commande attribués sont générés.

Fig. 1

Fig. 2

Fig. 3

Fig. 4

Fig. 5

Fig. 6

Fig. 7